# NEW EUROPEAN PATENT SPECIFICATION

(11) **EP 1 344 714 B2**
(45) Date of publication and mention of the opposition decision: **16.04.2014**
(45) Mention of the grant of the patent: 06.02.2008
(21) Application number: 02005875.6
(22) Date of filing: 14.03.2002
(51) Int. Cl.: B62M 11/16

(54) **Hub transmission for a bicycle**
Fahrradantriebsnabe
Moyeu d'entraînement de bicyclette

(43) Date of publication of application: 17.09.2003
(73) Proprietor: SHIMANO INC., Osaka 590-8577 (JP)
(72) Inventor: Shoge, Akihiko, Yamaguchi 750-1101 (JP)
(74) Representative: Wallinger, Michael

(56) References cited:
- EP-A- 0 531 608
- EP-A- 1 028 275
- EP-B1- 1 028 275
- DE-A1- 3 732 977
- DE-C- 251 410
- DE-C- 808 417
- US-A- 1 490 644
- US-A- 5 609 542

## Description

The present invention relates to bicycle transmissions and more particularly to an internal bicycle hub transmission having a planetary gear with two or more sections of different diameter.

The European Patent EP 0 531 608 discloses a multi-speed hub transmission with up to 7-speeds by which two planetary gear mechanisms are provided, each including a set of planetary gears and a corresponding ring gear. With an increasing number of gear speeds, an increasing number of clutches is necessary for transferring the drive force through the associated sun gears, planetary gears and ring gears and finally to the hub body.

DE 37 32 977 A1 shows a hub transmission for a bicycle with a planetary gear mechanism comprising a stepped, excentric planetary carrier pin supporting two separate planetary gears of different diameters.

US 1,490,644 shows in Fig. 21 a hub transmission for a bicycle according to the preamble of claim 1.

In addition, the planetary gears become increasingly complex structures through the requirement of having to provide two and sometimes more gear ratios. The planetary gears consequently have two or more sections of differing diameter and the mechanical load on the various sections of the planetary gear may differ. For example, the larger diameter gear section of the planetary gear used for low-speed transmission may be subject to a much larger torque than the other smaller diameter sections of the planetary gear. This can lead to transverse as well as torsional forces within the planetary gear which may not be adequately supported by the carrier pin on which the planetary gear is mounted. Such carrier pins are conventionally linear pins and do not account for one portion of the planetary gear being subject to higher mechanical stress than another portion of the planetary gear.

It is therefore an object of the present invention to provide an improved multi-speed hub transmission, by which the carrier pin is reinforced to account for differing loads in the planetary gear which it supports.

The present invention has the features of claim 1.

By providing the diameters of sections of the carrier pin to correlate with the diameters of gear sections of the planetary gear, the mechanical strength of the carrier pin is then reinforced or enhanced in the regions where higher mechanical load occurs due to the larger diameter sections of the planetary gear.

According to the invention, the larger diameter pin section of the carrier pin supports the larger diameter gear section of the planetary gear over more than 50% of the axial width of the larger diameter gear section. The smaller diameter pin section of the carrier pin supports the smaller diameter gear section of the planetary gear over more than 50% of its axial width. Constructing the carrier pin in this configuration ensures that the larger diameter gear section which is subject to the highest mechanical load is always substantially carried by a reinforced portion of the carrier pin.

The principle of the present invention is then to match the load carrying capability of the carrier pin to the actual loads arising in the various sections of the planetary gear. The invention has particular advantage when applied to multi-speed hub transmission, where the planetary gears often have two or three sections of different diameter, corresponding to different gear ratios.

Further advantages of the present invention can be taken from the following description of embodiments taken in conjunction with the drawings.

Fig. 1 shows a first embodiment of a 7-speed hub transmission according to the present invention, where the planetary gears comprise two sections of different diameter and the carrier pin comprises two sections of different diameter.

Fig. 2 shows an enlargement of a planetary gear mechanism of the embodiment of Fig. 1.

Fig. 3 shows a second embodiment of the present invention, where the configuration of the carrier pin is modified.

Embodiments of the present invention are explained more fully in the following in conjunction with the drawings.

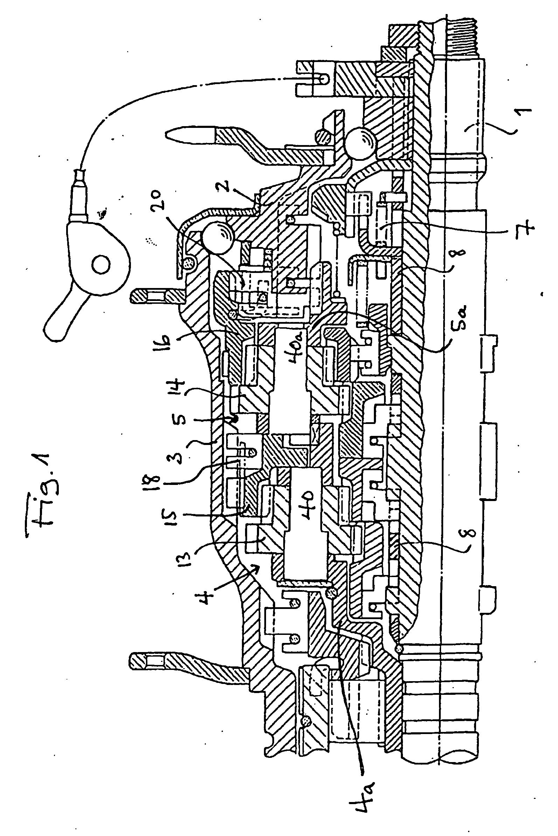

Fig. 1 shows a 7-speed hub transmission of a first embodiment, where a drive member 2 transmits rotational force to a hub body 3 rotatably supported on the hub axle 1. The drive transmission train from the drive member 2 to the hub body 3 includes a first planetary gear mechanism 4 including a ring gear 15. A second planetary gear mechanism 5 is also provided with a second ring gear 16. Depending on the selected rotational force transmission path, or more specifically the selected speed, the ring gears 15 and 16 variously engage with planetary gears 13 and 14, respectively.

The carrier pins 40 and 40a of the first and second planetary gear mechanisms 4, 5 are supported in planetary gear carriers 4a and 5a, respectively. The planetary gears 13 and 14 are supported on the carrier pins 40 and 40a respectively and engage with sun gears on the hub axle 1 which are selected by a clutch control member 8.

The clutch control member 8 and a clutch operating mechanism 7 define a change speed control mechanism which sets the position of the sun gears and clutches within the hub transmission. For example, a first low-speed setting of the change speed control mechanism defines a transmission path of the torque from the drive member 2 to the hub body 3 through a transmission clutch 20, the second ring gear 16, the planetary carrier 5a, the planetary carrier 4a, the first ring gear 15 and a second transmission clutch 18.

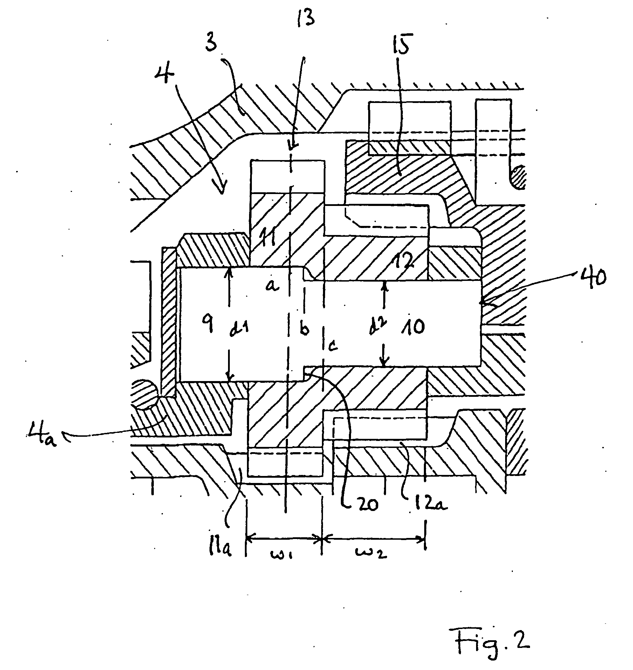

Fig. 2 gives an enlarged illustration of the first planetary gear mechanism 4, which best illustrates the details of the present embodiment. The carrier pin 40 is supported in the gear carrier 4a and includes a larger diameter pin section 9 and a smaller diameter pin section 10. The planetary gear 13 is supported on the carrier pin 40 and includes a larger diameter gear section 11 and a smaller diameter gear section 12. The larger diameter gear section 11 meshes with a sun gear 11a and the smaller diameter gear section 12 meshes with another sun gear 12a. The smaller diameter gear section 12 also meshes with the gear ring 15.

In the present embodiment, the two gear sections 11 and 12 of the planetary gear 13 are formed integrally as one piece. It is also possible however that the planetary gear 13 be formed of two gear sections made of separate pieces connected to one another. In other embodiments, it is also possible that the planetary gear 13 can have three sections of different diameter.

As can be seen in Fig. 2, the larger diameter gear section 11 of the planetary gear 13 has a width w1 extending from the left-hand side of the gear section 11 to the partition line c. The center line a of the larger diameter gear section 11 is also indicated. The larger diameter pin section 9 of the carrier pin 40 has the diameter d1, while the smaller diameter pin section 10 has the diameter d2.

The larger diameter pin section 9, which represents a reinforced section of the carrier pin 40, extends over more than 50% of the axial width w1 of the larger diameter gear section 11. As can be taken from Fig. 2, the larger diameter pin section 9 extends from the left to the right beyond the center line a up to a radial step 20, which represents the transition from the larger diameter pin section 9 to the smaller diameter pin section 10. In the embodiment of Fig. 2, about 70% of the axial width of the larger diameter gear section 11 is supported by the larger diameter pin section 9. Generally, 50% or more of the width w1 will be supported by the larger diameter pin section 9 and preferably 70% or more is supported by the larger diameter pin section 9.

In other embodiments, it may be desirable to extend the larger diameter pin section 9 into the region of the smaller diameter gear section 12. However, in any case the smaller diameter pin section 10 having the diameter d2 will support the smaller diameter gear section 12 over more than 50% of its axial width w2. Preferably, more than 80% of the axial width w2 of the smaller diameter gear section 12 is supported by the smaller diameter pin section 10.

The relationship between the diameter d1 of the larger diameter pin section 9 to the diameter d2 of the smaller diameter pin section 10 will depend upon the particular application, namely on the various diameters of the gear sections 11 and 12 of planetary gear 13. It may also depend upon whether a third gear section of the planetary gear 13 is present or not. However, the diameter d1 of the larger diameter pin section 9, which provides the reinforcement in support of the larger diameter gear section 11 will normally be such that it is at least 10% larger than the diameter d2 of the smaller diameter pin section 10. In other embodiments, the diameter d1 of the larger diameter pin section 9 can be 20% larger than the diameter d2 of the smaller diameter pin section 10.

As mentioned above, the transition from the larger diameter pin section 9 to the smaller diameter pin section 10 in the embodiment of Fig. 2 is formed by a radial step 20. The radial step 20 is formed at an axial position b located between the center line a of the axial width w1 of the larger diameter gear section 11 and the partition line c between the larger and smaller diameter gear sections 11 and 12. The position of this radial step 20 defines the load carrying extension of the larger diameter pin section 9. In most cases, the axial position b will be located between the center line a and the partition line c, however in other embodiments the axial position b of the radial step 20 may extend into the region of the smaller diameter pin section 10.

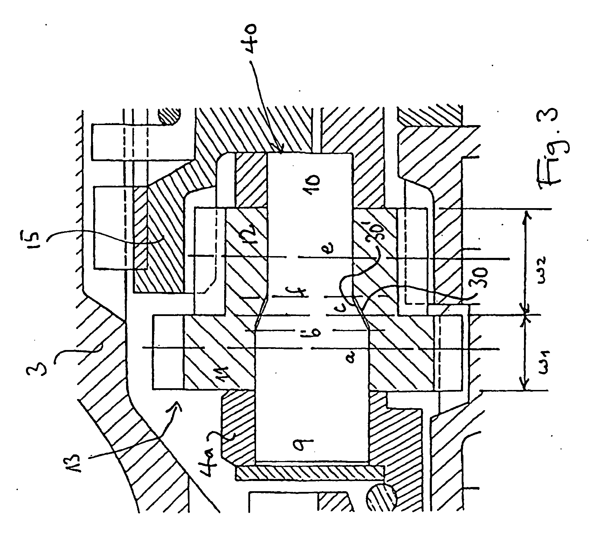

Fig. 3 illustrates another embodiment of the carrier pin 40. The transition from the larger diameter pin section 9 to the smaller diameter pin section 10 is formed as a taper 30 which extends about the circumference of the carrier pin 40. The taper 30 begins at an axial position b' located between the center line a of the axial width w1 of the larger diameter gear section 11 and the partition line c between the larger and smaller diameter gear sections 11 and 12. The taper 30 ends at an axial position f located between the partition line c and the center line e of the axial width w2 of the smaller diameter gear section 12. In this embodiment, the load carrying portion of the larger diameter pin section 9 extends over at least 50% of the axial width w1 of the larger diameter gear section 11. The load carrying portion of the smaller diameter pin section 10 is somewhat less than 100% of the axial width w2 of the smaller diameter gear section 12. The load carrying portion of the smaller diameter pin section 10 however is well over 50% of the axial width w2 of the smaller diameter gear section 12.

As indicated in Fig. 3, a small space may be left between the taper 30 formed in the planetary gear 13 and the taper 30' provided on the pin carrier 40. In this case, the region of the taper would not itself represent a load carrying portion of the carrier pin 40. In other embodiments, the parts can be machined with high precision, so that no space remains between the tapers 30 and 30'. The axial extension of the taper between the lines b' and f in Fig. 3 would then be a load carrying portion.

Alternative to the embodiment of Fig. 3, the taper 30 can be formed with a curvature when viewed in cross-section. In either figuration, whether the taper is linear or curved, a tapering of the transmission region provides a more uniform distribution of mechanical stress caused by the planetary gear 13, which is to be supported by the reinforced carrier pin 40.

## Claims

1. A hub transmission for a bicycle comprising:
a hub axle (1);
a drive member (2) and a hub body (3) rotatably supported on said hub axle (1);
at least one planetary gear mechanism (4, 5) for transmitting rotational force from the drive member (2) to the hub body (3) through multiple rotational force transmission paths, said at least one planetary gear mechanism comprising at least one planetary gear (11, 12) mounted on a planetary carrier pin (40) in a planetary gear carrier (4a), and
a change speed control mechanism (7, 8) comprising at least one clutch (18) for selecting one of the rotational force transmission paths; wherein
the planetary gear comprises at least one larger diameter gear section (11) and at least one smaller diameter gear section (12), each defining different gear ratios **characterised in that**, the carrier pin (40) comprises at least one larger diameter pin section (9) and at least one smaller diameter pin section (10),
the larger diameter pin section (9) of the carrier pin (40) supports the larger diameter gear section (11) of the planetary gear over more than 50% of the axial width (w1) of the larger diameter gear section (11) and
the smaller diameter pin section (10) of the carrier pin (40) supports the smaller diameter gear section (12) of the planetary gear over more than 50% of the axial width (w2) of the smaller diameter gear section (12).

2. Hub transmission of claim 1, wherein the larger diameter pin section (9) of the carrier pin (40) has a diameter (d1) which is more than 10% larger than the diameter (d2) of the smaller diameter pin section (10).

3. Hub transmission of any one of the claims 1 to 2, wherein the transition from the larger diameter pin section (9) to the smaller diameter pin section (10) of the carrier pin (40) is formed as a radial step (20).

4. Hub transmission according to claim 3, wherein the radial step (20) is formed at an axial position (b) between a center line (a) of the axial width (w1) of the larger diameter gear section (11) and a partition line (c) between the larger and smaller diameter gear sections (11, 12).

5. Hub transmission of any one of the claims 1 to 2, wherein the transition from the larger diameter pin section (9) to the smaller diameter pin section (10) of the carrier pin (40) is formed as a taper (30).

6. Hub transmission according to claim 5, wherein the taper (30) begins at an axial position (b') between a center line (a) of the axial width (w1) of the larger diameter gear section (11) and a partition line (c) between the larger and smaller diameter gear sections (11, 12).

7. Hub transmission according to claim 5 or 6, wherein the taper (30) ends at an axial position (f) between the partition line (c) between the larger and smaller diameter gear sections (11, 12) and a center line (e) of the axial width (w2) of the smaller diameter gear section (12).

8. Hub transmission of claim 5, 6 or 7, wherein the taper (30) is one of a linear taper and a curved taper when viewed in cross-section.

9. Hub transmission of any one of the previous claims, wherein the planetary gear comprises two gear sections (11, 12) of different diameter and the carrier pin (40) comprises two pin sections (9, 10) of different diameter.

## Patentansprüche

1. Nabenschaltung für ein Fahrrad mit:
einer Nabenachse (1);
einem Antriebskörper (2) und einem Nabenkörper (3), welcher drehbar auf dieser Nabenachse (1) gelagert ist;
wenigstens einem Planetengetriebemechanismus (4, 5), um Drehmoment von dem Antriebskörper (2) auf den Nabenkörper (3) über mehrere Drehmoment-Übertragungswege zu übertragen, wobei dieser wenigstens eine Planetengetriebemechanismus wenigstens ein Planetenrad (11, 12) aufweist, welches auf einem Planetentragstift (40) in einem Planetenradträger (4a) angebracht ist, und
einem Gangschaltmechanismus (7, 8), welcher wenigstens eine Kupplung (18) aufweist, um einen der Drehmoment-Übertragungswege auszuwählen; wobei
das Planetenrad wenigstens einen Verzahnungsbereich mit größerem Durchmesser (11) und wenigstens einen Verzahnungsbereich mit kleinerem Durchmesser (12) aufweist, welche verschiedene Übersetzungsverhältnisse bestimmen,
**dadurch gekennzeichnet, dass**
der Planetentragstift (40) wenigstens einen Tragstiftbereich mit größerem Durchmesser (9) und wenigstens einen Tragstiftbereich mit kleinerem Durchmesser (10) aufweist,
der Tragstiftbereich mit größerem Durchmesser (9) des Planetentragstifts (40) den Verzahnungsbereich mit größerem Durchmesser (11) des Planeten rads über mehr als 50 % der axialen Breite (w1) des Verzahnungsbereichs mit größerem Durchmesser (11) lagert und
der Tragstiftbereich mit kleinerem Durchmesser (10) des Planetentragstifts (40) den Verzahnungsbereich mit kleinerem Durchmesser (12) des Planetenrads über mehr als 50 % der axialen Breite (w2) des Verzahnungsbereichs mit kleinerem Durchmesser (12) lagert.

2. Nabenschaltung gemäß Anspruch 1, wobei der Tragstiftbereich mit größerem Durchmesser (9) des Planetentragstifts (40) einen Durchmesser (d1) aufweist, welcher mindestens 10 % größer als der Durchmesser (d2) des Tragstiftbereichs mit kleinerem Durchmesser (10) ist.

3. Nabenschaltung gemäß einem der Ansprüche 1 bis 2, wobei der Übergang vom Tragstiftbereich mit größerem Durchmesser (9) zum Tragstiftbereich mit kleinerem Durchmesser (10) des Planetentragstifts (40) als radiale Stufe (20) ausgebildet ist.

4. Nabenschaltung gemäß Anspruch 3, wobei die radiale Stufe (20) an einer axialen Position (b) zwischen einer Mittellinie (a) der axialen Breite (w1) des Verzahnungsbereichs mit größerem Durchmesser (11) und einer Trennlinie (c) zwischen den Verzahnungsbereichen mit größerem bzw. kleinerem Durchmesser (11, 12) ausgebildet ist.

5. Nabenschaltung gemäß einem der Ansprüche 1 bis 2, wobei der Übergang vom Tragstiftbereich mit größerem Durchmesser (9) zum Tragstiftbereich mit kleinerem Durchmesser (10) des Planetentragstifts (40) als Abschrägung (30) ausgebildet ist.

6. Nabenschaltung gemäß Anspruch 5, wobei die Abschrägung (30) an einer axialen Position (b') zwischen einer Mittellinie (a) der axialen Breite (w1) des Verzahnungsbereichs mit größerem Durchmesser (11) und einer Trennlinie (c) zwischen den Verzahnungsbereichen mit größerem bzw. kleinerem Durchmesser (11, 12) beginnt.

7. Nabenschaltung gemäß Anspruch 5 oder 6, wobei die Abschrägung (30) an einer axialen Position (f) zwischen der Trennlinie (c) zwischen den Verzahnungsbereichen mit größerem bzw. kleinerem Durchmesser (11, 12) und einer Mittellinie (e) der axialen Breite (w2) des Verzahnungsbereichs mit kleinerem Durchmesser (12) endet.

8. Nabenschaltung gemäß Anspruch 5, 6 oder 7, wobei die Abschrägung (30) im Querschnitt betrachtet eine gerade oder eine gekrümmte Abschrägung ist.

9. Nabenschaltung gemäß einem der vorherigen Ansprüche, wobei das Planetenrad zwei Verzahnungsbereiche (11, 12) mit verschiedenen Durchmessern aufweist und der Planetentragstift (40) zwei Tragstiftbereiche (9, 10) mit verschiedenen Durchmessern aufweist.

## Revendications

1. Transmission de moyeu pour une bicyclette comprenant :
un essieu de moyeu (1) ;
un élément d'entraînement (2) et un corps de moyeu (3) supportés de manière rotative sur ledit essieu de moyeu (1) ;
au moins un mécanisme à engrenage planétaire (4, 5) destiné à transmettre une force de rotation à partir de l'élément d'entraînement (2) jusqu'au corps de moyeu (3) à travers de multiples voies de transmission de force de rotation, ledit au moins un mécanisme à engrenage planétaire comprenant au moins un engrenage planétaire (11, 12) monté sur une broche porteuse planétaire (40) dans un support d'engrenage planétaire (4a), et
un mécanisme de contrôle de changement de vitesse (7, 8) comprenant au moins un embrayage (18,) destiné à sélectionner l'une des voies de transmission de force de rotation ;
l'engrenage planétaire comprenant au moins une section d'engrenage de diamètre supérieur (11) et au moins une section d'engrenage de diamètre inférieur (12), chacune définissant différents rapports d'engrenage, **caractérisée en ce que** la broche porteuse (40) comprend au moins une section de broche de diamètre supérieur (9) et au moins une section de broche de diamètre inférieur (10),
la section de broche de diamètre supérieur (9) de la broche porteuse (40) supportant la section d'engrenage de diamètre supérieur (11) de l'engrenage planétaire sur plus de 50 % de la largeur axiale (w1) de la section d'engrenage de diamètre supérieur (11) et
la section de broche de diamètre inférieur (10) de la broche porteuse (40) supportant la section d'engrenage de diamètre inférieur (12) de l'engrenage planétaire sur plus de 50 % de la largeur axiale (w2) de la section d'engrenage de diamètre inférieur (12).

2. Transmission de moyeu selon la revendication 1, dans laquelle la section de broche de diamètre supérieur (9) de la broche porteuse (40) a un diamètre (d1) qui est supérieur de plus de 10 % au diamètre (d2) de la section de broche de diamètre inférieur (10).

3. Transmission de moyeu selon l'une quelconque des revendications 1 ou 2, dans laquelle la transition de la section de broche de diamètre supérieur (9) à la section de broche de diamètre inférieur (10) de la broche porteuse (40) est formée comme une étape radiale (20).

4. Transmission de moyeu selon la revendication 3, dans laquelle l'étape radiale (20) est formée au niveau d'une position axiale (b) entre une ligne centrale (a) de la largeur axiale (w1) de la section d'engrenage de diamètre supérieur (11) et une ligne de séparation (c) entre les sections d'engrenage de diamètre supérieur et inférieur (11, 12).

5. Transmission de moyeu selon l'une quelconque des revendications 1 ou 2, dans laquelle la transition de la section de broche de diamètre supérieur (9) à la section de broche de diamètre inférieur (10) de la broche porteuse (40) est formée comme une partie resserrée (30).

6. Transmission de moyeu selon la revendication 5, dans laquelle la partie resserrée (30) commence au niveau d'une position axiale (b') entre une ligne centrale (a) de la largeur axiale (w1) de la section d'engrenage de diamètre supérieur (11) et une ligne de séparation (c) entre les sections d'engrenage de diamètre supérieur et inférieur (11, 12).

7. Transmission de moyeu selon la revendication 5 ou 6, dans laquelle la partie resserrée (30) se termine au niveau d'une position axiale (f) entre la ligne de séparation (c) entre les sections d'engrenage de diamètre supérieur et inférieur (11, 12) et une ligne centrale (e) de la largeur axiale (w2) de la section d'engrenage de diamètre inférieur (12).

8. Transmission de moyeu selon la revendication 5, 6 ou 7, dans laquelle la partie resserrée (30) est l'une d'une partie resserrée linéaire et d'une partie resserrée incurvée lorsqu'elle est vue en coupe transversale.

9. Transmission de moyeu selon l'une quelconque des revendications précédentes, dans laquelle l'engrenage planétaire comprend deux sections d'engrenage (11, 12) de diamètre différent et la broche porteuse (40) comprend deux sections de broche (9, 10) de diamètre différent.
